# EUROPEAN PATENT SPECIFICATION

(11) **EP 2 143 343 B1**
(45) Date of publication and mention of the grant of the patent: **13.02.2013**
(21) Application number: 08104719.3
(22) Date of filing: 11.07.2008
(51) Int. Cl.: A23L 1/30, A23L 1/302

(54) **Learning improvement**
Lernverbesserung
Amélioration de l'apprentissage

(43) Date of publication of application: 13.01.2010
(73) Proprietor: Vifor SA, 1752 Villars-sur-Glane 1 (CH)
(72) Inventor: Portwood, Madeleine, Durham, DL14 8QQ (GB)
(74) Representative: Lecca, Patricia S.

(56) References cited:
- WO-A-2004/028529
- DE-U1-202007 000 949
- US-A1- 2007 141 138
- ANONYMOUS: "Children's health - eye q"[Online] November 2007 (2007-11), pages 1-4, XP002507901 Retrieved from the Internet: URL:http://www.equazen.com/gfx/ul/files/Ey e%20Q%20Consumer%20Lft_FINAL.pdf> [retrieved on 2008-12-08]
- BOURRE JEAN-MARIE: "Dietary omega-3 fatty acids for women" BIOMEDICINE & PHARMACOTHERAPY, vol. 61, no. 2-3, February 2007 (2007-02), pages 105-112, XP022039586 ISSN: 0753-3322
- ZHANG JIAN ET AL: "Dietary fat intake is associated with psychosocial and cognitive functioning of school-aged children in the United States" JOURNAL OF NUTRITION, vol. 135, no. 8, August 2005 (2005-08), pages 1967-1973, XP002507903 ISSN: 0022-3166
- EILANDER ET AL: "Effects of n-3 long chain polyunsaturated fatty acid supplementation on visual and cognitive development throughout childhood: A review of human studies" PROSTAGLANDINS LEUKOTRIENES AND ESSENTIAL FATTY ACIDS, EDINBURGH, vol. 76, no. 4, 18 April 2007 (2007-04-18), pages 189-203, XP022029236 ISSN: 0952-3278
- BEBLO ET AL: "Effect of Fish Oil Supplementation on Fatty Acid Status, Coordination, and Fine Motor Skills in Children with Phenylketonuria" JOURNAL OF PEDIATRICS, MOSBY-YEAR BOOK, ST. LOUIS, MO, US, vol. 150, no. 5, 21 April 2007 (2007-04-21), pages 479-484, XP022045953 ISSN: 0022-3476

## Description

### Field of the invention

The invention relates to the use of omega-3-eicosapentaenoic acid, omega-3-docosahexaenoic acid and gamma-linolenic acid for improving the learning abilities of children as set forth in the claims.

### Background of the invention

Long-chain polyunsaturated essential fatty acids (EFA) are concentrated in the brain and nervous system. Docosahexaenoic acid (DHA) (omega-3) is the most abundant polyunsaturated fatty acid in the brain, where it is concentrated in the neuronal synapses and appears to be integral to neurotransmission. Eicosapentaenoic acid (omega-3), arachidonic acid, and gamma-linolenic acid (omega-6) are also thought to be important in neurotransmission, and deficiencies have been linked with psychiatric and developmental disorders. The association between deficiencies in omega-3 and omega-6 fatty acids and children's behaviour and learning difficulties has been established. These neuro-developmental disorders include attention deficit/hyperactivity disorder (ADHD), developmental coordination disorder (DCD)/dyspraxia, dyslexia, and autistic spectrum disorder in school-age children and young adults. Omega-3 and omega-6 cannot be synthesized by humans and must be provided by means of dietary sources. These dietary sources, however, have been declining in Western societies. In 20% of children with behavioural and learning difficulties, standard interventions, such as targeted reading practice, structured coordination activities, and behavioural management, have resulted in only minimal improvements. Furthermore, a large proportion of these children were found to have eczema, asthma, lactose intolerance, or other allergies that also could be related to dietary deficiencies.

Two recent studies have shown the beneficial effects of omega-3/-6 essential fatty acid supplementation, as compared with placebo, when looking at ADHD, dyslexia, and DCD/dyspraxia. In the Oxford-Durham study (Richardson A.J. and Montgomery P., Pediatrics 2005; 115:1360-66) 117 schoolchildren with DCD, aged 5-12 years, randomly received omega-3/-6 supplementation or placebo, six capsules daily for 3 months, followed by 3 months of omega-3/-6 supplementation at the same dose for all. Significant reductions in ADHD symptoms were reported for the active-supplementation group, using subscales of the Conners' Teacher Rating Scale-Long Version (CTRS-L). The second study (Sinn N. and Bryan J., J Dev Behav Pediatr 2007; 28:82-91) involved 132 Australian children aged 7-12 years who scored ≥2 SD above population norms on the Conners' ADHD index, a subscale of the Conners' Parent Rating Scale-Long Version (CPRS-L), but who did not have a clinical diagnosis of ADHD for the study. The children underwent randomisation to receive 3 months of omega-3/-6 supplementation or matching placebo. A micronutrient supplement containing vitamins (A, B₂, B₃, B₅, B₆, B₁₂, C, D₃, and E) and minerals (zinc, magnesium, copper, and iron), or placebo, was added to assess if supplementation yielded any additional benefit. Significant reductions in ADHD symptoms were found on the CPRS-L, but not on the corresponding CTRS-L, and there was no significant difference with or without micronutrients.

Other studies that included preschool children (18 months-3 years), primary school-aged children (5-12 years), or adolescents (12-15 years) have demonstrated positive outcomes (Portwood M.M., Nutr Health 2006; 18:219-32). In children with DCD, dietary omega-3/-6 supplementation had a similar effect size as methylphenidate on the Conners' ADHD index scale (Schachter H.M., Pham B., King J., Langford S., and Moher D., CMAJ 2001; 165:1475-88). It was also noted that children in the classroom no longer needed constant reminders to remain focused, which ultimately benefited the whole class, and not just those with learning difficulties.

There is strong evidence to show that eicosapentaenoic acid (EPA), DHA, and gamma-linolenic acid are required in combination to have a substantive effect on attention, concentration, and learning in children with behavioural and learning problems. Results from DHA-only trials have shown no improvements in ADHD symptoms when compared with placebo in children aged 6-12 years (Voigt R.G., Llorente A.M., Jensen C.L., Fraley J.K., Berretta M.C., and Heird W.C., J Pediatr 2001; 139:189-96; Hirayama S., Hamazaki T., and Terasawa K., Eur J Clin Nutr 2004; 58:467-73).

To date, no randomised controlled trials involving mainstream primary school children (ages 5-12 years) have been undertaken to assess the effect of dietary omega-3/-6 supplementation on learning and behaviour.

### Summary of the invention

The invention relates to a mixture of omega-3-eicosapentaenoic acid and omega-3-docosahexaenoic acid, gamma-linolenic acid and vitamin E for use in improving the learning abilities of normal children of age 6 to 12, in particular for increasing their reading age.

It is now surprisingly found that the mixture of omega-3-eicosapentaenoic acid, omega-3-docosahexaenoic acid and vitamin E, and gamma-linolenic acid not only helps to cure neurodevelopment disorders, such as learning disorders, attention deficit/hyperactivity disorders (ADHD), developmental coordination disorder (DCD)/dyspraxia, dyslexia, and autistic spectrum disorder, but is also beneficial in healthy school-age children and young adults with average behaviour and intelligence.

### Detailed description of the invention

The invention relates to a combination of omega-3-eicosapentaenoic acid and omega-3-docosahexaenoic acid, gamma-linolenic acid and vitamin E for use in improving the learning abilities of normal children. In particular, the invention relates to a mixture of omega-3-eicosapentaenoic acid, omega-3-docosahexaenoic acid gamma-linolenic acid and vitamin E for use in improving the reading age of children aged 6 to 12 with average intelligence.

Omega-3-eicosapentaenoic acid is *all*-*cis*-5,8,11,14,17-eicosapentaenoic acid, sometimes abbreviated EPA.

Omega-3-docosahexaenoic acid is *all*-*cis*-4,7,10,13,16,19-docosahexaenoic acid, sometimes abbreviated DHA.

Omega-3 fatty acids occur naturally in fish oil and algae, but many other minor sources are also known.

Gamma-linolenic acid, also called gamma-linoleic acid, is *all*-*cis*-6,9,12-octadecatrienoic acid, sometimes abbreviated GLA. It belongs to the class of omega-6 fatty acids. A major source is evening primrose oil, borage oil and black currant seed oil, and also fish oil.

The combination comprising omega-3-eicosapentaenoic acid (EPA), omega-3-docosahexaenoic acid (DHA) and gamma-linolenic acid (GLA) further comprises the anti-oxidant vitamin E (tocopherol).

It may further comprise other vitamins.

Vitamins considered are the fat-soluble vitamin A (retinol), vitamin D (calciferol, e.g. vitamin D₃, cholecalciferol), vitamin E (alpha-tocopherol), and vitamin K (phyllochinone), and the water-soluble vitamin C (ascorbic acid) and vitamins of the B group, for example thiamin (B₁), riboflavin (B₂), niacin (B₃), pantothenic acid (B₅), pyridoxine (B₆), biotin (B₇), folic acid (B₉), and cobalamine (B₁₂).

The relative amounts of the omega-3 fatty acids are preferably in the range of 1 part DHA to 1 to 10 parts (weight per weight (w/w)) EPA, in particular 1 part DHA to 2 to 5 parts (w/w) EPA, such as 1 part DHA to 3 to 3.5 parts (w/w) EPA. The relative amount of the omega-6 fatty acid GLA to the combined omega-3 fatty acids DHA and EPA are preferably in the range of 1 part GLA to 5 to 20 parts (w/w) DHA/EPA, in particular 1 part GLA to 10 to 15 parts (w/w) DHA/EPA, such as 1 part GLA to 11 to 13 parts (w/w) DHA/EPA.

A preferred source of the combination of the invention comprising omega-3-eicosapentaenoic acid, omega-3-docosahexaenoic acid and gamma-linolenic acid (omega-3/omega-6 fatty acids) is fish oil.

The daily doses considered are in the range of 0.2 g to 2 g omega-3 fatty acids or combined omega-3/omega-6 fatty acids, preferably 0.4 g to 1.5 g combined omega-3/omega-6 fatty acids, most preferably 0.6 to 1.0 g combined omega-3/omega-6 fatty acids. The daily dose is usually applied in three equal parts, one in the morning, one in the middle of the day, and one late in the afternoon or in the evening.

The combination of omega-3-eicosapentaenoic acid, omega-3-docosahexaenoic acid and gamma-linolenic acid (omega-3/omega-6 fatty acids) is provided in any of the usual standard pharmaceutical formulations suitable for oral consumption. Suitable formulations are, for example, soft or hard capsules, oil or syrup, but also other forms such as lozenges or chewing-gums. The formulations may contains additional excipients, dyes or pigments, and flavours, in particular flavours masking the fishy taste.

Preferred are hard capsules consisting of gelatin, and also soft, sealed capsules consisting of gelatin and a plasticizer, such as glycerol or sorbitol. The size of the capsules is preferably so chosen that the preferred daily dose is provided by 1, 2, 3, 6 or 9 capsules.

Alternatively, the combination of omega-3-eicosapentaenoic acid, omega-3-docosahexaenoic acid and gamma-linolenic acid (omega-3/omega-6 fatty acids) may be administered as an oil to be taken in liquid form, for example added to normal food. Preferably such an oil contains further fat-soluble flavours in order to change or mask the fishy taste of the combination. When administered as a syrup the combination is provided as a suspension in water containing emulsifying compounds and suitable flavours. Oils or syrups are preferably provided in containers allowing simple dosing.

It has been surprisingly found in the trial described below that omega-3/-6 and vitamin E dietary supplementation with children across the learning and behavioural spectrum from mainstream primary schools improves learning ability and behaviour. In the past, a number of studies have shown the benefit of omega-3/-6 supplementation in children with learning and behavioural difficulties, but no positive effect had been shown or could even be expected with healthy school-age children and young adults with average behaviour and intelligence.

As shown below, reading age and working memory improves significantly during the first 3 months in the active supplementation group compared with the placebo group. After crossover from placebo to active supplementation, children in this group made significant gains in their second 3-month period, which were close to the levels achieved by the supplementation group in their first 3-month period.

The primary schools of Middlesborough, UK, chosen for the trial are a representative cross-section of the population, ranging from those with 33% of pupils for whom English was their second language, to schools without any students from minority groups. The results are applicable to an overall population with a broad socioeconomic status.

The baseline digit span scores were slightly below the mean value of 10 for the 'average' child (equivalent to an intelligence quotient of 100), but well within the normal range of 8.5-11.5. The improvements in the reading age of 14.2 months at 6 months for the active-supplementation group and of 7.4 months in 3 months in the placebo group after crossover to active supplementation are encouraging.

There are statistically significant improvements in reading age and working memory with omega-3/-6 supplementation when compared with placebo. The treatment group over 6 months increased their reading age by over 14 months on average, which is 8 months greater than would be expected without intervention. This is of considerable educational importance: the pupils on active supplementation gained virtually a two-term advantage over their peers. The benefits of omega-3/-6 fatty acid dietary supplementation are evident with a cross-section of mainstream pupils, and, for those children continuing to take supplementation, their poststudy level is higher than would have been achieved without supplementation.

### Trial participants

The trial population consisted of children between the ages of 6 and 12 years from nine mainstream primary schools in Middlesbrough, UK, who were willing to participate in the study. Researchers presented the rationale and design of the trial to teachers, who then gave presentations to the parents of pupils in their schools. Parents were provided with detailed information and given a date for return of completed consent forms. There was no prerequisite baseline score for CTRS-L or CPRS-L, as it was deemed essential to include pupils across the spectrum of abilities represented in mainstream settings. The CTRS-L and the CPRS-L were used to monitor that participants remained within the expected ranges throughout the study. Children were excluded if they had significant neurological, psychiatric, or medical problems, including epilepsy, cerebral palsy, multiple sclerosis, myalgic encephalopathy, pervasive developmental disorder, ADHD, or autism. Consumption of fatty acid supplements within the previous 3 months was also a criterion for exclusion.

### Study design

This was a double-blind, placebo-controlled, randomised trial with a one-way crossover (placebo to active supplementation only) after 3 months. Randomisation and blinding of treatments was organised by the suppliers of the omega-3/-6 supplement, Equazen Limited (London, UK), who kept the register of treatment codes. Allocation of children to treatments was prerandomised with the constraint that numbers of active- and placebo-treated children were balanced between the sexes. A computer-generated random sequence was used to prepare the treatments in sequentially numbered containers, and a register was kept in a remote secure location until all study data had been collected, collated, checked, and verified. Treatments were assigned to each participating school in sequentially numbered blocks matching the number of children taking part. Participants, those administering the interventions, assessors, investigators, and those undertaking data collection and analysis were all blinded to group assignments.

### Interventions

The active treatment was a supplement containing 80% fish oil and 20% evening primrose oil (the ratio used in previous studies, Portwood M.M., Nutr Health 2006; 18:219-32) in gelatin capsules. The product, eye q^{™}, is a registered nutritional supplement classified as a food and subject to the provisions of the UK Food Safety Act 1990. Use in the trial did not differ from the manufacturer's recommendations. The daily dose of six capsules provided omega-3 fatty acids (558 mg of eicosapentaenoic acid and 174 mg of DHA) and the omega-6 fatty acid gamma-linolenic acid (60 mg) plus 9.6 mg of vitamin E (natural form, alpha-tocopherol). Placebo treatment consisted of identical-looking capsules of olive oil. The capsules were coloured with 4.05 mg of carrot oil macerate to ensure they looked identical to the active capsules, and were flavoured with 2.7 mg of eicosapentaenoic acid and 1.8 mg of DHA (equivalent to 2.9% of the eicosapentaenoic acid and 6.2% DHA intake relative to the active supplement intake) to ensure a 'fishy' taste, combined with refined olive oil. On weekdays, treatments were administered at the schools, in three divided doses of two capsules each (early morning, lunchtime, and late afternoon), by coordinating teachers. At weekends, children were given capsules to take at home on the same schedule, under parental supervision.

### Study assessments

All primary outcome measures were obtained at pretreatment baseline and at 3- and 6-month follow-up. Comparison of the effects of parallel treatments for 3 months was the primary focus of the study and was considered to be the minimum treatment period because of the slow turnover of these fatty acids in neuronal membranes. The following measures were used for assessment of cognitive function, attainment, concentration, and behaviour at baseline, 3 months, and 6 months:
- The Wechsler Objective Reading Dimensions (WORD) - a measurement of reading age.
- The Wechsler Intelligence Scale for Children (WISC-III UK) Digit Span subtest - an assessment of working memory by measuring an individual's ability to remember sequences of numbers and repeat them forwards and backwards.
- The Conners' Parent Rating Scales-Long Version (CPRS-L) - a parent-rated assessment of a range of behavioural parameters in their child, which included cognitive problems, hyperactivity, social problems, ADHD, and emotional lability.
- The Conners' Teacher Rating Scales-Long Version (CTRS-L) - a teacher-rated assessment of their students, using the same parameters as in the CPRS-L.

### Endpoints

The primary endpoints were the changes observed in age-standardised tests of reading age and working memory at 3 months in parallel groups. Secondary endpoints were the changes in the CPRS-L and CTRS-L at 3 months in parallel groups. After crossover of the placebo group to active supplementation, re-assessment of reading age, working memory, CPRS-L, and CTRS-L was completed at 6 months for all children.

### Compliance

At the end of each 3-month treatment period, compliance was assessed using counts of capsules remaining and cross-checked against the daily logbooks kept by teachers who supervised the administration of supplements on weekdays and record forms completed by parents at home at weekends and during school holidays. An appointed member of staff in each school was designated to record any adverse events. A percentage figure for treatment compliance was calculated from a combination of teacher logbooks and counts of capsules returned from supplies provided to parents for use during weekends and holidays. Children were deemed compliant if their capsule consumption was at least 90% of the total number of capsules.

### Statistical analyses

Sample size calculations were based on reading age data collected in Durham during the Oxford-Durham study. It was estimated that a total sample size of 238 (equal groups of 119) would be required to detect a difference of 4 months in mean reading age improvement between groups, with 80% power at the α=0·05 level. A target sample size of 250 was chosen for this study.

Planned parallel-group comparisons were performed after 3 months on the primary outcome measures of changes in reading age and digit span. To allow comparisons with other studies, analysis of mean change scores was completed for each outcome measure using paired t-tests on all available data. Planned group comparisons were also performed on the secondary outcome measures of CPRS-L and CTRS-L, using the Mann-Whitney U test. Within-group analysis of variance was used to test the 3- to 6-month changes. Analyses were performed using SPSS 13.0 software (SPSS Inc, Chicago, IL, USA).

### Demographic and clinical characteristics

241 children underwent randomisation, with a further 26 children given active supplement (N=267); this was because active and placebo trial supplementation was provided for only 250 participants and recruitment was on a first-come, first-served basis. The placebo supplement had been made to order and it was not possible to acquire further supplies at short notice. Signed consent forms were received for 241 children, and on the following day, which was still within the timescale to apply, another 26 applications were received. As these involved pupils from two schools it was not possible to randomly allocate supplements to 9 children while the others were excluded (as all 26 applications were received together). It was therefore agreed to provide active supplement for all the children in these two schools. The staff and pupils in the school were not aware that all children were given the active supplement, but for the purposes of analysis these children were excluded.

The initial cohort of 267 children included 175 boys (65.5%) and 92 girls (34.5%), all of whom underwent baseline assessments of reading age, working memory, and behaviour. Of these, 241 (153 boys [63.5%] and 88 girls [36.5%]) were allocated to double-blind treatment and included for analysis. Two children withdrew after treatment allocation, reporting that they were unable to take capsules; both were in the active treatment group. 120 children were assigned randomly to omega-3/-6 supplementation and 121 to placebo. Between allocation and the 3-month assessment, another 5 children withdrew from the study (4 in the active-supplementation group and 1 in the placebo group), indicating that they no longer wished to continue, leaving 234 who completed the first 3-month trial period (114 on active supplementation and 120 in the placebo group). Of the 234 children assessed at 3 months, 14 were lost to follow-up, 10 left their school (3 were Year 6 transfers to secondary schools), and 4 no longer wished to continue in the study, leaving 220 available for follow-up assessment at 6 months (108 on active supplementation and 112 in the placebo-to-active-supplementation group).

### Baseline

Age was well matched between the two groups at baseline (Table 1). Age for the total population ranged from 6 years (72 months) to 11 years and 8 months (140 months); the active-supplementation group had a slightly higher mean age, but this was not significant. Although there were more boys than girls, the percentages of boys and girls in the active and placebo groups were well matched. The majority of children were white, but there were a number from ethnic minority groups. The breakdown of 87% white and 13% non-white children reflects the overall UK national ethnic mix from the 2001 census. This has not been the case in other studies of omega-3/-6 supplementation and adds to the applicability of the results to all mainstream children. At baseline, the mean reading age of the active-supplementation group was higher than placebo, but the difference was not statistically significant. Mean digit span score did not differ between the two groups at baseline, although the score for the active-supplementation group was slightly lower. These scores are slightly below the mean value of 10 for the 'average' child (equivalent to an intelligence quotient of 100), but well within the normal range of 8.5-11.5. The two groups were well matched for CTRS-L at baseline, with no between-group differences for Conners' or Diagnostic and Statistical Manual of Mental Disorders, Fourth Edition (DSM-IV) assessments. Baseline CPRS-L values also were well matched between the two groups. Ratings by parents were marginally higher for all parameters than those by teachers.

### Endpoints

At 3 months, the mean ± SD reading age of the placebo group had increased from 103.96 ± 25.91 to 108.81 ± 28.59 months, whereas in the active-supplementation group reading age increased from 107.79 ± 28.45 to 118.10 ± 33.58 months (Table 2). The mean increase in reading age in the placebo group was 5.32 ± 8.82 months and 9.19 ± 9.96 months in the active-supplementation group. The 0- to 3-month group comparisons were statistically significant (t -3·01 ; p=0·003). After crossover, reading age in the placebo group increased to 116.21 ± 31.55 months. This effect was similar to the increase seen in the active-supplementation group during the first 3 months. In the active-supplementation group, mean reading age continued to increase to 122.00 ± 33.99 months, showing that the improvement in reading age continued during the second 3-month period.

Working memory, as measured by mean ± SD WISC Digit Span, increased from 9.06 ± 2.89 to 9.17 ± 2.79 in the placebo group during the first 3 months, and from 8.86 ± 2.75 to 10.32 ± 2.92 in the active-supplementation group (Table 3). The mean increase in working memory in the placebo group was 0.10 ± 1.79 and 1.42 ± 2.19 in the active-supplementation group. The 0- to 3-month group comparisons were statistically significant (t -4·97; p<0·0005). After crossover of the placebo group to active supplementation, mean digit span increased to 10.50 ± 2.96, whereas scores in the supplementation group increased to 10.63 ± 2.74. Some school effects were observed.

For the CPRS-L and CTRS-L, scores tended to be slightly higher overall when children were assessed by parents. When individual parameters were assessed, there was a tendency for improvement in both active and placebo supplementation groups at 3 and 6 months, but these were not statistically significant and all children remained within the normal ranges on both scales throughout the study (Tables 4 and 5).

### Safety

No adverse events related to the supplementation were recorded during the study.

### Treatment compliance

Compliance rates were high throughout the study, probably reflecting the involvement of teachers and parents in administering treatment. During the first 3 months, compliance was 93.1 % (94/101) in the placebo group and 91.4% (96/105) in the active-supplementation group. In the second 3 months, compliance in the placebo-to-active-supplementation group was 91.2% (83/91) and 88.0% (81/92) in the supplementation group. There was no significant difference in compliance between the two groups in either phase or throughout the study as a whole.

**Table 1: Baseline characteristics**

| | Placebo (n=121) | Active (n=120) | p value |
|---|---|---|---|
| Mean ± SD age, years | 101.17 ± 15.61 | 103..2 ± 14·80 | 0.194 |
| Range | 72-140 | 75-138 | |
| Sex, n (%)^{a} | | | |
| Male | 75 (62) | 78 (65) | ns |
| Female | 46 (38) | 42 (35) | ns |
| Total | 121 | 120 | p<0.0005^{b} |
| Race/ethnicity, n (%) | | | |
| White | 105 (87) | 104 (87) | ns |
| Asian | 15 (12) | 13 (11) | ns |
| Black | 1 (1) | 3 (3) | ns |
| Reading age^{c} | | | |
| Mean ± SD | 103.96 ± 25.91 | 107.79 ± 28.45 | ns |
| Median | 99 | 102 | |
| IQR | 36 | 38 | |
| Digit span | | | |
| Mean ± SD | 9.06 ± 2.89 | 8.6 ± 2.7 | ns |
| Median | 9 | 9 | |
| IQR | 4 | 3 | |
| Conners' Teacher Rating Scales (Median)^{d} | | | |
| Oppositional | 48 | 51 | 0.151 |
| Cognitive problems | 55 | 57 | 0.733 |
| Hyperactivity | 48 | 52 | 0.017 |
| Anxious-shy | 55 | 52 | 0.437 |
| Perfectionism | 44 | 44.5 | 0.353 |
| Social problems | 47 | 48 | 0.593 |
| Conners' ADHD Index | 54 | 56.5 | 0.078 |
| Conners' Global Restless Impulsive | 53 | 58 | 0.046 |
| Conners' Global Emotional Lability | 46 | 49 | 0.107 |
| Conners' Global Index Total | 53 | 56 | 0.038 |
| DSM-IV Inattentive | 55 | 58.5 | 0.396 |
| DSM-IV Hyperactive | 48 | 52 | 0.010 |
| DSM-IV Total | 53 | 56 | 0.117 |
| Conners' Parent Rating Scales (Median)^{d} | | | |
| Oppositional | 56 | 521 | 0.838 |
| Cognitive problems | 60.5 | 59 | 0.591 |
| Hyperactivity | 54 | 56 | 0.375 |
| Anxious-shy | 53 | 51 | 0.330 |
| Perfectionism | 48 | 48 | 0.545 |
| Social problems | 50 | 50 | 0.713 |
| Conners' ADHD Index | 58 | 56 | 0.402 |
| Conners' Global Restless Impulsive | 59.5 | 59 | 0.712 |
| Conners' Global Emotional Lability | 59 | 57 | 0.922 |
| Conners' Global Index Total | 53 | 56 | 0.444 |
| DSM-IV Inattentive | 59.5 | 58 | 0.769 |
| DSM-IV Hyperactive | 5.5 | 58.5 | 0.656 |
| DSM-IV Total | 57 | 58.5 | 0.428 |

| | | | |
|---|---|---|---|
| ^{a} Fisher's exact probability test; p = 1 (two-sided) used. ^{b} Significant difference between the number of males (n=153) and females (n=88) recruited; X²₁=17.53. ^{c} WISC-III UK total score - age-standardised with respect to general population norms (mean 100, SD 15). ^{d} p<0.004 is significant. ADHD = attention deficit/hyperactivity disorder. DSM-IV = Diagnostic and Statistical Manual of Mental Disorders, Fourth Edition. ns = not significant. | | | |

**Table 2: Reading ages for active treatment and placebo-crossover groups at pretreatment baseline, 3 months, and 6 months**

| | Mean age (SD) | | | | 0- to 3-month group comparisons, independent samples *t* test | | Mean age (SD) | |
|---|---|---|---|---|---|---|---|---|
| | Baseline | | 3 months | | *t* | *p* | 6 months | |
| | Placebo (n=115) | Active (n=116) | Placebo (n=111) | Active (n=109) | | | Placebo-crossover* (n=107) | Active (n=105) |
| Reading age | 103.96 (25.91) | 107.79 (28.45) | 108.81 (28.59) | 118.10 (33.58) | -3.01 | 0.003 | 116.21 (31.55) | 122.00 (33.99) |

| | | | | | | | | |
|---|---|---|---|---|---|---|---|---|
| *Crossover to active supplementation at 3 months. | | | | | | | | |

**Table 3: Wechsler Intelligence Scale for Children (WISC-III UK) digit span (working memory) scores for active treatment and placebo-crossover* groups at pretreatment baseline, 3 months, and 6 months**

| | Mean digit span (SD) | | | | 0- to 3-month group comparisons, independent samples *t* test | | Mean digit span (SD) | |
|---|---|---|---|---|---|---|---|---|
| | Baseline | | 3 months | | *t* | *p* | 6 months | |
| | Placebo (n=120) | Active (n=118) | Placebo (n=115) | Active (n=114) | | | Placebo-crossover* (n=107) | Active (n=104) |
| Digit span | 9.06 (2.89) | 8.86 (2.75) | 9.17 (2.79) | 10.32 (2.92) | -4.97 | <0.0005 | 10.50 (2.95) | 10.63 (2.74) |

| | | | | | | | | |
|---|---|---|---|---|---|---|---|---|
| *Crossover to active supplementation at 3 months. | | | | | | | | |

**Table 4: Conners' Teacher Rating Scales**

| | Placebo | | | | Active supplementation | | |
|---|---|---|---|---|---|---|---|
| | Median Baseline (n=106) | Median 3 months (n=73) | Median 6 months (n=60) | | Median Baseline (n=108) | Median 3 months (n=78) | Median 6 months (n=65) |
| Oppositional | 48 | 48 | 46 | | 51 | 51 | 46 |
| Cognitive problems | 55 | 58 | 55 | | 57 | 58 | 54 |
| Hyperactivity | 48 | 51 | 45.5 | | 52 | 52 | 48 |
| Anxious-shy | 55 | 51 | 49 | | 52 | 51 | 48 |
| Perfectionism | 44 | 44 | 44.5 | | 44.5 | 44 | 45 |
| Social problems | 47 | 46 | 46 | | 48 | 48 | 46 |
| Conners' ADHD Index | 54 | 56 | 49 | | 56.5 | 57 | 51 |
| Conners' Global Restless Impulsive | 53 | 57 | 51 | | 58 | 59 | 50 |
| Conners' Global Emotional Lability | 46 | 49 | 45 | | 49 | 50 | 46 |
| Conners' Global Index Total | 53 | 55 | 49.5 | | 56 | 56.5 | 50 |
| DSM-IV Inattentive | 55 | 57 | 52 | | 58.5 | 57 | 53 |
| DSM-IV Hyperactive | 48 | 49 | 45 | | 52 | 53.5 | 48 |
| DSM-IV Total | 53 | 56 | 49.5 | | 56.5 | 57 | 51 |

| | | | | | | | |
|---|---|---|---|---|---|---|---|
| ADHD = attention deficit/hyperactivity disorder. DSM-IV = *Diagnostic and Statistical Manual of Mental Disorders, Fourth Edition.* | | | | | | | |

**Table 5: Conners' Parent Rating Scales**

| | Placebo | | | | Active supplementation | | |
|---|---|---|---|---|---|---|---|
| | Median Baseline (n=100) | Median 3 months (n=63) | Median 6 months (n=43) | | Median Baseline (n=108) | Median 3 months (n=72) | Median 6 months (n=52) |
| Oppositional | 56 | 56 | 52 | | 52 | 50 | 52 |
| Cognitive problems | 60.5 | 56 | 51 | | 59 | 56 | 53 |
| Hyperactivity | 54 | 54 | 50 | | 56 | 53 | 51 |
| Anxious-shy | 53 | 51 | 50 | | 51 | 48 | 46 |
| Perfectionism | 48 | 49 | 46 | | 48.5 | 47 | 47.5 |
| Social problems | 50 | 51 | 47 | | 50 | 49 | 50 |
| Psychosomatic | 58 | 53 | 47 | | 56 | 48 | 48 |
| Conners' ADHD Index | 59.5 | 53 | 51 | | 59 | 56 | 52 |
| Conners' Global Restless Impulsive | 59 | 57 | 52 | | 57 | 54 | 52 |
| Conners' Global Emotional Lability | 53 | 57 | 48 | | 56 | 51 | 51 |
| Conners' Global Index Total | 59.5 | 57 | 52 | | 58 | 54 | 51.5 |
| DSM-IV Inattentive | 58.5 | 53 | 51 | | 58.5 | 55 | 53 |
| DSM-IV Hyperactive | 57 | 54 | 50 | | 58.5 | 54 | 53 |
| DSM-IV Total | 59 | 55 | 51 | | 59.5 | 55 | 51.5 |

| | | | | | | | |
|---|---|---|---|---|---|---|---|
| ADHD = attention deficit/hyperactivity disorder. DSM-IV = Diagnostic and Statistical Manual of Mental Disorders, Fourth Editi*on.* | | | | | | | |

## Claims

1. Use of a combination of omega-3-eicosapentaenoic acid, omega-3-docosahexaenoic acid, omega-6 fatty acid gamma-linolenic acid, and vitamin E for increasing the reading age of mainstream primary school children being of age 6 to 12 years and having an average intelligence, wherein the relative amounts of the omega-3 fatty acids are in the range of 1 part omega-3-docosahexaenoic acid to 1 to 10 parts (w/w) omega-3-eicosapentaenoic acid, and wherein the relative amount of gamma-linolenic acid to the omega-3 fatty acids is in the range of 1 part gamma-linolenic acid to 5 to 20 parts (w/w) of omega-3-eicosapentaenoic acid plus omega-3-docosahexaenoic acid.

2. Use of the combination according to claim 1, wherein the relative amounts of the omega-3 fatty acids are in the range of 1 part omega-3-docosahexaenoic acid to 3 to 3.5 parts (w/w) omega-3-eicosapentaenoic acid.

3. Use of the combination according to claim 1 or 2, wherein the relative amount of gamma-linolenic acid to the omega-3 fatty acids is in the range of 1 part gamma-linolenic acid to 11 to 13 parts (w/w) of omega-3-eicosapentaenoic acid plus omega-3-docosahexaenoic acid.

4. Use of the combination according to any of claims 1 to 3, wherein the combination is obtained from fish oil.

5. Use of the combination according to any of claims 1 to 4, wherein said combination of omega-3-eicosapentaenoic acid, omega-3-docosahexaenoic acid, and gamma-linolenic acid is administered in a daily dose is of between 0.2 g and 2 g.

6. Use of the combination according to any of claims 1 to 5, wherein said combination of omega-3-eicosapentaenoic acid and omega-3-docosahexaenoic acid, and optionally gamma-linolenic acid is administered in a daily dose of between 0.6 g and 1 g.

7. Use of claim 5 or 6, wherein said combination is administered in an oral daily dose.

8. Use of the combination according to any of claims 1 to 7, wherein said combination is provided as an oral formulation.

9. Use of claim 8, wherein the combination is provided in the form of soft or hard capsules, oil or syrup, lozenges, or chewing gums.

10. Use of claim 9, wherein the combination is provided in the form of syrup as a suspension in water.

## Patentansprüche

1. Verwendung einer Kombination aus Omega-3-Eicosapentaensäure, Omega-3-Docosahexaensäure, Omega-6-Fettsäure-Gammalinolensäure und Vitamin E, um das Lesealter von Kindern von Integrationshauptschulen im Alter von 6 bis 12 Jahren und mit einer durchschnittlichen Intelligenz zu erhöhen, wobei die relativen Mengen der Omega-3-Fettsäruen im Bereich von 1 Teil Omega-3-Docosahexaensäure zu 1 bis 10 Teilen (w/w) Omega-3-Eicosapentaensäure liegen, und wobei die relative Menge von Gammalinolensäure zu den Omega-3-Fettsäuren im Bereich von 1 Teil Gammalinolensäure zu 5 bis 20 Teilen (w/w) Omega-3-Eicosapentaensäure plus Omega-3-Docosahexaensäure liegt.

2. Verwendung der Kombination nach Anspruch 1, wobei die relativen Mengen der Omega-3-Fettsäruen im Bereich von 1 Teil Omega-3-Docosahexaensäure zu 3 bis 3,5 Teilen (w/w) Omega-3-Eicosapentaensäure liegen.

3. Verwendung der Kombination nach Anspruch 1 oder 2, wobei die relative Menge von Gammalinolensäure zu den Omega-3-Fettsäuren im Bereich von 1 Teil Gammalinolensäure zu 11 bis 13 Teilen (w/w) Omega-3-Eicosapentaensäure plus Omega-3-Docosahexaensäure liegt.

4. Verwendung der Kombination nach einem der Ansprüche 1 bis 3, wobei die Kombination aus Fischtran erhalten wird.

5. Verwendung der Kombination nach einem der Ansprüche 1 bis 4, wobei die Kombination aus Omega-3-Eicosapentaensäure, Omega-3-Docosahexaensäure und Gammalinolensäure in einer täglichen Dosis von zwischen 0,2 g und 2 g verabreicht wird.

6. Verwendung der Kombination nach einem der Ansprüche 1 bis 5, wobei die Kombination aus Omega-3-Eicosapentaensäure und Omega-3-Docosahexaensäure und optional Gammalinolensäure in einer täglichen Dosis von zwischen 0,6 g und 1 g verabreicht wird.

7. Verwendung von Anspruch 5 oder 6, wobei die Kombination in einer täglichen oralen Dosis verabreicht wird.

8. Verwendung der Kombination nach einem der Ansprüche 1 bis 7, wobei die Kombination als eine orale Formulierung bereitgestellt wird.

9. Verwendung von Anspruch 8, wobei die Kombination in der Form von weichen oder harten Kapseln, Öl oder Sirup, Pastillen oder Kaugummis bereitgestellt wird.

10. Verwendung von Anspruch 9, wobei die Kombination in der Form eines Sirups oder einer Suspension in Wasser bereitgestellt wird.

## Revendications

1. Utilisation d'une combinaison d'acide oméga-3-éicosapentaénoïque, d'acide oméga-3-docosahexaénoïque, d'acide gras oméga-6, d'acide gamma-linolénique, et de vitamine E pour améliorer l'apprentissage à la lecture d'enfants d'école primaire ordinaire âgés de 6 à 12 ans d'intelligence moyenne, **caractérisée en ce que** les quantités relatives des acides gras oméga-3 se situent dans la plage de 1 partie d'acide oméga-3-docosahexaénoïque pour 1 à 10 parties (p/p) d'acide oméga-3-éicosapentaénoïque, et **caractérisée en ce que** la quantité relative d'acide gamma-linolénique par rapport aux acides gras oméga-3 se situe dans la plage de 1 partie d'acide gamma-linolénique pour 5 à 20 parties (p/p) d'acide oméga-3-éicosapentaénoïque plus l'acide oméga-3-docosahexaénoïque.

2. Utilisation de la combinaison selon la revendication 1, **caractérisée en ce que** les quantités relatives des acides gras oméga-3 se situent dans la plage de 1 partie d'acide oméga-3-docosahexaénoïque pour 3 à 3,5 parties (p/p) d'acide oméga-3-éicosapentaénoïque.

3. Utilisation de la combinaison selon la revendication 1 ou 2, **caractérisée en ce que** la quantité relative d'acide gamma-linolénique par rapport aux acides gras oméga-3 se situe dans la plage de 1 partie d'acide gamma-linolénique pour 11 à 13 parties (p/p) d'acide oméga-3-éicosapentaénoïque plus l'acide oméga-3-docosahexaénoïque.

4. Utilisation de la combinaison selon l'une quelconque des revendications 1 à 3, **caractérisée en ce que** la combinaison est obtenue à partir d'huile de poisson.

5. Utilisation de la combinaison selon l'une quelconque des revendications 1 à 4, **caractérisée en ce que** ladite combinaison d'acide oméga-3-éicosapentaénoïque, d'acide oméga-3-docosahexaénoïque et d'acide gamma-linolénique est administrée en dose quotidienne comprise entre 0,2 g et 2 g.

6. Utilisation de la combinaison selon l'une quelconque des revendications 1 à 5, **caractérisée en ce que** ladite combinaison d'acide oméga-3-éicosapentaénoïque et d'acide oméga-3-docosahexaénoïque, et optionnellement d'acide gamma-linolénique est administrée en dose quotidienne comprise entre 0,6 g et 1 g.

7. Utilisation selon la revendication 5 ou 6, **caractérisée en ce que** ladite combinaison est administrée en dose quotidienne orale.

8. Utilisation de la combinaison selon l'une quelconque des revendications 1 à 7, **caractérisée en ce que** ladite combinaison est fournie sous la forme d'une formulation orale.

9. Utilisation selon la revendication 8, **caractérisée en ce que** la combinaison est fournie sous la forme de capsules molles ou dures, d'huile ou de sirop, de pastilles ou de gommes à mâcher.

10. Utilisation selon la revendication 9, **caractérisée en ce que** la combinaison est fournie sous la forme de sirop en tant qu'une suspension dans de l'eau.
